# EUROPEAN PATENT SPECIFICATION

(11) **EP 0 974 442 B1**
(45) Date of publication and mention of the grant of the patent: **21.11.2001**
(21) Application number: 99305746.2
(22) Date of filing: 20.07.1999
(51) Int. Cl.: B29C 45/26

(54) **Manufacture of annular disc shaped information carriers**
Herstellung von ringförmigen plattenförmigen Informationsträgern
Fabrication de supports d'information annulaires en forme de disque

(30) Priority: 21.07.1998 GB 9815908
(43) Date of publication of application: 26.01.2000
(73) Proprietor: Tooling Components & Design Limited, Basingstoke, Hamshire RG24 8UQ (GB)
(72) Inventor: Cheesman, Terence Colin, Hook, Hampshire RG27 9NP (GB)
(74) Representative: Everitt, Christopher James Wilders

(56) References cited:
- EP-A- 0 047 645
- EP-A- 0 537 953
- US-A- 5 612 062
- PATENT ABSTRACTS OF JAPAN vol. 17, no. 384 (P-1575), 19 July 1993 (1993-07-19) & JP 05 062252 A (MITSUBISHI PLASTICS IND LTD), 12 March 1993 (1993-03-12)

## Description

This invention relates to the manufacture of annular disc-shaped information carriers and more particularly to apparatus which is operable to hold replaceable annular information sub-masters against a flat face of a mould cavity of a mould tool held in a moulding machine for manufacturing such a carrier.

The replaceable annular information sub-master (often referred to as a stamper) is a metal (usually nickel) component which has the information on it in negative form for moulding onto the information carrier.

The mould tool in the moulding machine comprises two annular flat faced members which are displaceable, one relative to the other between a closed position, wherein they together partially bound the mould cavity, and an open position wherein the formed information carrier can be ejected from the tool. A third mould part, which in the closed position of the two annular mould members is projected through the centre of one of the annular members, through the mould cavity and into the central hole of the other member forms the central hole of the information carrier. A fourth mould part (sometimes referred to as an ejector) also projects through the centre of one of the annular members, whilst the latter are in the open position, in order to eject the information carrier from the mould tool. The flat face against which the stamper is held is formed by one of the annular mould members.

It is common practice around the world for the annular stamper to be held in place against that flat face of the mould cavity by means of a clamping lip or claw which engages the peripheral portion of the stamper around its central hole, that clamping lip or claw being carried by a tubular stamper holder which is fitted into the central hole of one of the annular mould members and which has a radial end face which is flush with the surface of the stamper. That stamper holder forms the bore within which, usually the ejector slides or within which, in some cases, a sprue bush slides. As a consequence disc-shaped information carriers formed thereby have annular grooves formed coaxially with and close to the central hole. This can be aesthetically displeasing, especially where the face of the carrier is illustrated or decorated by matter printed across its surface.

WO92/08597 and WO94/20288 disclose the use of suction means or magnetic means as an alternative to mechanical means for holding the stamper in position in the mould cavity. WO94/19166 discloses the provision of a number of holes in the end wall of the mould cavity whereby the stamper is held against that end wall by suction. JP-A-05 06 2252 and EP-A-0 537 953 disclose provision of a magnet to hold the stamper in position in the mould cavity. The magnet may be a ring magnet which is flush with the tool surface against which the stamper is held. US-A-5 612 062 discloses the use of a ring-shaped permanent magnet which is secured by a ring-shaped collar in an end portion of a stamper plate bush or stamper holder.

The annular mould member that forms the end face against which the stamper is held is a very expensive component. The high value itself is a deterrent to that annular mould member being modified or otherwise mechanically worked upon such as would be necessary were it to be provided with holes in its end wall and further modified to enable the stamper to be held against it by suction or magnetism. Standard practice in the manufacture of mould tools is for the metal that forms the mould cavity to be hardened and then ground and polished to ensure the standard required for the surface finish is achieved. This requirement for hardening dictates the use of ferrous metal. This poses problems when the use of magnetic means is considered as it is anticipated the ferrous metal will absorb a significant amount of the magnetic field so that there would not be sufficient strength of magnetism remaining to hold the stamper satisfactory. This is especially so if the magnetic means were to be in the form of a ring fitted below the surface, as, were there to be as little as lmm of ferrous metal between the ring magnet and the stamper, the strength of magnetism would be reduced to the point where it would fail to successfully hold the stamper in place during manufacture of the information carrier due to the rigours of the manufacturing process. Further a magnetic ring of suitable size would be expensive and would be difficult to manufacture since the magnetic material is especially brittle so there is a risk that it may break up during machining or during fitting.

An object to this invention is to provide improved means for holding an annular stamper against the surface of the other annular mould member which is a viable compromise between the conflicting requirements discussed above.

According to this invention there is provided a magnetic arrangement for holding an annular stamper. against a flat face of a mould member of a moulding machine for manufacturing an annular disc shaped information carrier, comprising a plurality of individual magnets and support means operable to support the magnets circumferentially spaced one from another in an annular array so that the magnets act directly against the stamper to hold the stamper against the flat face.

Preferably the support means are formed of a non-ferrous material. Conventionally the magnets are rod magnets which are encapsulated in respective cavities formed in the surface of the non-ferrous material of the support means, the cavities being formed so that the magnets are oriented normal with the surface of the support means to which the respective ends of the magnets are flush and against which the stamper is held by magnetic force exerted by the magnets. Conveniently the support means surface and the exposed ends of the magnets are ground and polished so as to match the flat face of the mould member.

In a preferred embodiment, the magnets are arranged in pairs so that the north and south poles of the magnets oppose one another. The preferred magnets are rare earth magnets, conveniently samarium cobalt magnets or possibly neodymium iron boron magnets. Preferably the support means are incorporated in a separate stamper holder which is fitted into a bore formed coaxially in the mould member. Conveniently the support means comprise an annular member of non-ferrous material which is secured, for example by screwing or by being a tight fit onto and being pinned, to an end face of a coaxial tubular component of a hardened ferrous material. The magnets may be bonded into a respective cavity in the annular member by a high temperature adhesive or may be fixed in some other way.

One embodiment of this invention and a modification thereof are described now by way of example with reference to the accompanying drawings, of which :-
Fig. 1 shows one form of stamper holder which embodies this invention fitted into an annular mould member which forms the face against which a stamper is to be held by the stamper holder, the annular mould member being sectioned on a diametral plane;
Fig. 2 is a partly sectioned view of the Stamper holder as shown in Figure 1 but drawn to a larger scale than in Figure 1, the section being on the line II-II in Figure 3;
Fig. 3 is an end view of the stamper holder as seen in the direction of arrow A in Figure 2;
Figure 4 is a transverse section of a detail of the stamper holder shown in Figure 2, drawn to a larger scale; and
Figure 5 is a transverse section of a fragment of a modified form of stamper holder which embodies this invention.

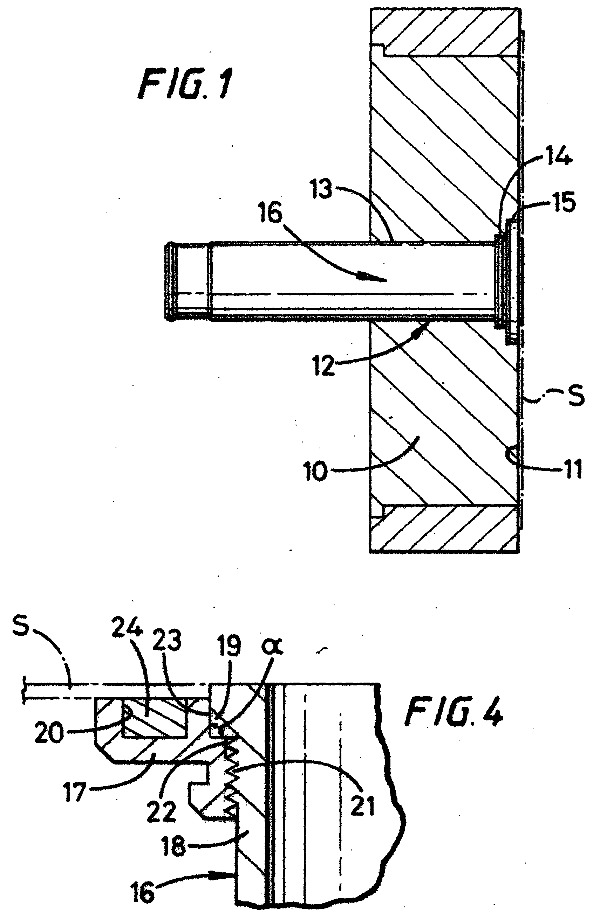

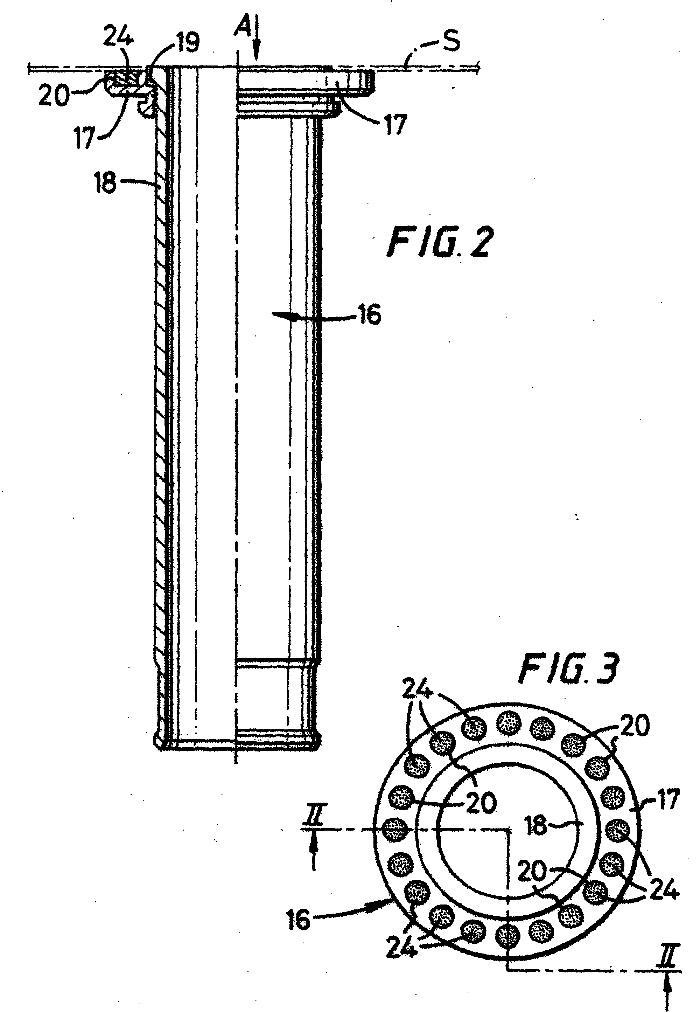

Figure 1 shows an annular tool 10 which forms part of an injection mould for forming an annular disc shaped information carrier which is generally known as a compact disc. The annular tool 10 has a radial end face 11 against which the annular stamper S is held face to face. The other side of the stamper S serves as a face of the mould cavity. The annular tool 10 has a central hole 12. The portion of the central hole 12 that extends inwardly from the radial face 11 is shown in Figures 1 and 3 as comprising a double stepped bore 13, 14 and 15, but this is to be understood as being purely exemplary. It could have any known form. For example it could be tapered.

A tubular stamper holder generally indicated at 16 is spigotted into the central hole 12, being suitably formed to fit into the portion of the central hole 12 that extends inwardly from the radial face 11.

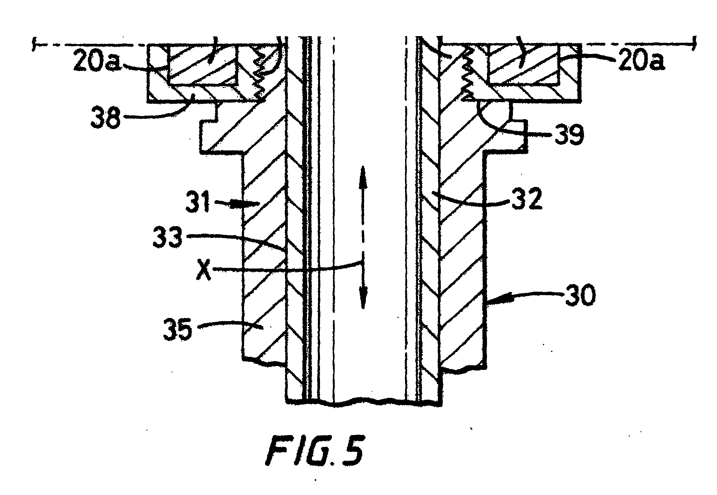

Figures 2 and 4 show that the tubular stamper holder 16 comprises a ring 17 of non-ferrous metal which is screwed onto a tube 18 of hardened ferrous metal so that the tube 18 projects beyond the ring 17 at one end thereof. The tube 18 has a radial end flange 19 at that one end. An external screw thread 21 is formed on the outer surface of the tube 18, to match an internal thread formed in a smaller diameter bore portion of a stepped bore of the ring 17 to fix the ring 17 and the tube 18 together. The larger diameter bore portion of the ring 17 has an axial length a little less than the axial length of the radial end flange 19, the difference being substantially equal to the thickness of the stamper S. The radially outer surface of the ring 17 is stepped as well, the larger diameter bore portion of the ring 17 being formed in the larger diameter portion of the ring 17. An annular groove for an 'O'-ring is formed in the radially outer surface of the smaller diameter portion of the ring 17, adjacent to the step in that radially outer surface. The ring 17 is screwed onto the tube 18 so that the radial end flange 19 of the tube 18 is seated in the shoulder formed between the smaller and larger diameter bore portions 22 and 23 of the ring 17. The circumferentially continuous corner formed at the end of the larger diameter bore portion 23 that is further from the smaller diameter bore portion 22 is formed accurately as a square corner α.

Figure 3 shows that the ring 17 carries a circumferential array of rod magnets 24. Each rod magnet 24 is spigotted into a respective correspondingly dimensioned blind bore 20 as shown in Figures 2 and 4. Each magnet 24 is encapsulated within the respective blind bore 20 and may be bonded therein by a high temperature adhesive which is capable of resisting temperatures of up to about 200°C. The magnets 24 are samarium cobalt magnets and they are arranged so that their poles are spaced one from another substantially parallel to the axis of the tubular stamper holder 16 so that they are oriented normal to the end face of the larger diameter portion of the ring 17 that receives the radial end flange 19. Also alternate pairs of the magnets 24 are arranged so that their north and south poles oppose one another. The end surface of the ring 17 that surrounds the ends of the magnets 24, the exposed ends of those magnets 24 and the end face of the radial end flange 19 are ground and polished. Also that end surface of the ring 17 makes a square annular corner with the radially outer surface of the radial end flange 19.

As there is a risk that the magnets may be chipped or cracked during manufacture of the stamper holder 16, or during use, the ground and polished end surface of the ring 17 that surrounds the ends of the magnets 24 and the end surfaces of those magnets 24 may be coated with a thin layer of a high temperature thermosetting resin in order to retain the magnets 24 within their respective bores 20.

In use, the stamper S is placed over the radial face 11 of the annular mould part 10 with its central hole fitted around the upstanding projecting portion of the radial end flange 19 of the tube 18 so that the radially inner portion of the stamper S seats on the polished end face of the ring 17 and is held there by the magnetism of the circumferential array of magnets 24. The polished end face of the radial end flange 19 is flush with the face of the stamper S that serves as a face of the mould cavity.

The ring 17 need not be screwed onto the tube 18 but may be fixed to it in any suitable manner. For example it may be a tight fit on the tube 18 and the ring 17 and the tube 18 may be pinned together, each of the pins extending, radially between an adjacent pair of the magnets 24.

Figure 5 shows a modified form of tubular stamper holder 30 which is to be used in another form of injection mould for forming an annular disc-shaped information carrier. The tubular stamper holder 30 also includes a tube 31 of hardened ferrous material and is to be used in substantially the same way as the stamper holder 16 described above with reference to and as shown in Figures 1 to 4 in conjunction with an ejector sleeve 32 which is slidable in either direction within the bore 33 of the tube 31 as is indicated by the arrows X.

The cylindrical outer surface of the tube 31 is stepped so that it forms a radially-outwardly projecting annular flange 34 which separates the major part 35 of the tube 31 from a smaller diameter end portion 36 which has an external screw thread 37 formed on it. The external surface of the flange 34 is stepped so that it has a single step, the smaller diameter portion being the portion that is nearer to the screw thread 37.

A ring 38 of non-ferrous metal is screwed onto the screw threaded end portion 36 of the tube 31 of hardened ferrous metal so that it abuts the smaller diameter end face 39 of the radial flange 34 and cooperates therewith to form an annular groove for an "O"-ring. The axial length of the ring 38 is substantially the same as that length of the ring 38 is substantially the same as that of the smaller diameter end portion 36 of the tube 31 so that the faces of the ring 38 and the tube 31 remote from the flange 34 are substantially flush.

Like the ring 17 of the embodiment described above with reference to and as shown in Figures 1 to 4, the ring 38 carries a circumferential array of rod magnets 24a. Each rod magnet 24a is spigotted into a respective correspondingly dimensioned blind bore 20a. Each magnet 24a is encapsulated within the respective blind bore 20a and may be bonded therein by a high temperature adhesive which is capable of resisting temperatures of up about 200°C. The magnets are rare earth magnets, and they are arranged so that their poles are spaced one from another substantially parallel to the axis of the tubular stamper holder 30 so that they are oriented normal to the end face of the ring 38. Also alternate pairs of the magnets 24a are arranged so that their north and south poles oppose one another. The end surface of the ring 24a, the exposed ends of the magnets 24a and the end face of the hardened ferrous tube 31 are ground and polished and may be coated with a thin protective coating which may be a resin coating.

In use, the stamper S is placed over the annular mould part into which the tubular stamper holder 30 is fitted and over the ring 38 and the exposed ends of the magnets 24a. The stamper S is located laterally with respect to the tubular stamper holder 30 by a projecting portion of the ejector sleeve 32 as shown in Figure 5 and is held there by the magnetism of the circumferential array of magnets 24a which act directly on it.

It may be preferable to arrange for the ring 38 to be a tight fit onto the end of the tube 31 and to be of the ring 38 is about the same as that of the larger diameter portion of the annular flange 34.

## Claims

1. A magnetic arrangement for holding an annular stamper (S) against a flat face (11) of a mould member (10) of a moulding machine for manufacturing an annular disc shaped information carrier, **characterised in that** it comprises a plurality of individual magnets and support means (17,38) operable to support the magnets (24,24a) circumferentially spaced one from another in an annular array so that the magnets (24,24a) act directly against the stamper (S) to hold the stamper against the flat face (11).

2. A magnetic arrangement according to claim 1, wherein the support means (17,38) are formed of a non-ferrous material.

3. A magnetic arrangement according to claim 2, wherein the magnets (24,24a) are rod magnets which are encapsulated in respective cavities (20,20a) formed in the surface of the non-ferrous material of the support means (17,38), the cavities (20,20a) being formed so that the magnets (24,24a) are oriented normal with the surface of the support means (17,38) to which the respective ends of the magnets (24,24a) are flush and against which the stamper (S) is held by magnetic force exerted by the magnets (24,24a).

4. A magnetic arrangement according to claim 3, wherein the support means surface and the exposed ends of the magnets (24,24a) are ground and polished so as to match the flat face (11) of the mould member (10).

5. A magnetic arrangement according to any one of claims 1 to 4, wherein the magnets (24,24a) are arranged in pairs so that the north and south poles of the magnets (24,24a) oppose one another.

6. A magnetic arrangement according to any one of claims 1 to 5, wherein the magnets (24,24a) are rare earth magnets.

7. A magnetic arrangement according to any one of claims 1 to 6, wherein the support means (17,38) are incorporated in a separate stamper holder (16,30) which is fitted into a bore (13) formed coaxially in the mould member (10).

8. A magnetic arrangement according to any one of claims 2 to 4 or any one of claims 5 to 7 when appended to claim 2, wherein the support means comprise an annular member (17,38) of non-ferrous material which is secured to a coaxial tubular component (18,31) of a hardened ferrous material.

9. A magnetic arrangement according to claim 8, wherein the coaxial tubular component (18,31) projects axially beyond said surface of the support means (17,38) whereby to provide lateral location for the stamper (S) that is held against the flat face (11).

10. A magnetic arrangement according to claim 8 or claim 9, wherein the magnets (24,24a) are bonded into a respective cavity (20,20a) in the annular member (17,38) by a high temperature adhesive.

## Patentansprüche

1. Eine Magnetanordnung, um einen ringförmigen Stempel (5) gegen eine flache Stirnfläche (11) eines Formglieds (10) einer Formmaschine für die Herstellung eines ringförmigen, plattenförmigen Informationsträgers zu halten, **dadurch gekennzeichnet, dass** er aus einer Vielfalt einzelner Magneten und Haltevorrichtungen (17, 38) besteht, die die am Umfang in gleichen Abständen zueinander angeordneten Magnete (24, 24a) in einer ringförmigen Anordnung halten, damit die Magnete (24, 24a) direkt gegen den Stempel (5) wirken, um den Stempel gegen die flache Stirnfläche (11) zu halten.

2. Eine Magnetanordnung nach Patentanspruch 1, wobei die Haltevorrichtungen (17, 38) aus einem Nichteisen-Material gebildet sind.

3. Eine Magnetanordnung nach Patentanspruch 2, wobei die Magnete (24, 24a) Stabmagnete sind, die in jeweiligen, in die Oberfläche des Nichteisen-Materials der Haltevorrichtungen (17, 38) eingeformten Hohlräumen (20, 20a) eingekapselt sind, wobei die Hohlräume (20, 20a) derart geformt sind, dass die Magnete (24, 24a) normal mit der Oberfläche der Haltevorrichtungen (17, 38) ausgerichtet sind, mit denen die jeweiligen Enden der Magnete (24, 24a) bündig sind und gegen die der Stempel (5) durch von den Magneten (24, 24a) ausgeübte Magnetkraft gehalten wird.

4. Eine Magnetanordnung nach Patentanspruch 3, wobei die Oberfläche der Haltevorrichtungen und die freiliegenden Enden der Magnete (24, 24a) geschliffen und poliert sind, um mit der flachen Stirnfläche (11) des Formglieds (10) abgeglichen zu sein.

5. Eine Magnetanordnung nach einem der Ansprüche 1 bis 4, wobei die Magnete (24, 24a) in Paaren angeordnet sind, so dass sich die Nord- und Südpole der Magnete (24, 24a) gegenüber liegen.

6. Eine Magnetanordnung nach einem der Ansprüche 1 bis 5, wobei die Magnete (24, 24a) Seltenerdmagnete sind.

7. Eine Magnetanordnung nach einem der Ansprüche 1 bis 6, wobei die Haltevorrichtungen (17, 38) in einem separaten Stempelhalter (16, 30) integriert sind, der in eine Bohrung (13) eingesetzt ist, die koaxial in das Formglied (10) geformt ist.

8. Eine Magnetanordnung nach einem der Ansprüche 1 bis 4 oder einem der Ansprüche 5 bis 7, wenn rückbezogen zu Anspruch 2, wobei die Haltevorrichtungen ein ringförmiges Glied (17, 38) aus Nichteisen-Material umfassen, das an einer koaxialen, röhrenförmigen Komponente (18, 31) aus gehärtetem Eisenmaterial gesichert ist.

9. Eine Magnetanordnung nach Patentanspruch 8, wobei die koaxiale röhrenförmige Komponente (18, 31) axial über die besagte Oberfläche der Haltevorrichtungen (17, 38) hinausragt, um seitliche Ausrichtung für den Stempel (5) zu liefern, der gegen die flache Stirnfläche (11) gehalten wird.

10. Eine Magnetanordnung nach Patentanspruch 8 oder Anspruch 9, wobei die Magnete (24, 24a) mit einem Hochtemperaturkleber in einen jeweiligen Hohlraum (20, 20a) im ringförmigen Glied (17, 38) eingeklebt sind.

## Revendications

1. Un dispositif magnétique pour le soutien d'une matrice annulaire (S) contre une face plate (11) d'un élément de moulage (5) d'une machine à mouler pour la fabrication d'un support d'informations annulaire en forme de disque, **caractérisé en ce qu'**il comprend un ensemble d'aimants individuels et un moyen de soutien (17, 38) pouvant être manoeuvré pour supporter les aimants (24, 24a) espacés les uns des autres sur une section circulaire le long d'un réseau annulaire de telle façon que les aimants (24, 24a) agissent directement contre la matrice (S) afin de soutenir la matrice contre la face plate (11).

2. Un dispositif magnétique selon la revendication 1, **caractérisé en ce que** le moyen de soutien (17, 38) est usiné à partir de métaux non ferreux.

3. Un dispositif magnétique selon la revendication 2, **caractérisé en ce que** les aimants (24, 24a) sont des aimants tige encapsulés dans les empreintes respectives (20, 20a) façonnées au niveau de la surface du matériel non ferreux du moyen de soutien (17, 38), lesdites empreintes étant usinées de telle façon que les aimants (24, 24a) soient orientés normalement par rapport à la surface du moyen de support (17, 38) selon laquelle les extrémités respectives des aimants (24, 24a) sont mises à niveau et contre laquelle la matrice (S) est soutenue par la force magnétique exercée par les aimants (24, 24a).

4. Un dispositif magnétique selon la revendication 3, **caractérisé en ce que** la surface du moyen de support et les extrémités apparentes des aimants (24, 24a) sont rectifiées et polies de façon à ce qu'elles coïncident avec la face plate (11) de l'élément de moulage (10).

5. Un dispositif magnétique selon l'une quelconque des revendications 1 à 4 **caractérisé en ce que** les aimants (24, 24a) sont regroupés en paires de façon à ce que les pôles nord et sud des aimants (24, 24a) s'opposent les uns par rapport aux autres.

6. Un dispositif magnétique selon l'une quelconque des revendications 1 à 5 **caractérisé en ce que** les aimants (24, 24a) sont des aimants de terres rares.

7. Un dispositif magnétique selon l'une quelconque des revendications 1 à 6 **caractérisé en ce que** le moyen de support (17, 38) est inséré dans un support de matrice séparé (16, 30) qui est à son tour fixé dans un alésage (13) façonné coaxialement dans l'élément de moulage (10).

8. Un dispositif magnétique selon l'une quelconque des revendications 2 à 4 ou l'une quelconque des revendications 5 à 7 relevant de la revendication 2, **caractérisé en ce que** le moyen de support comprend un élément annulaire (17, 38) en matériel non ferreux et fixé à un composant tubulaire coaxial (18, 31) en matériel ferreux trempé.

9. Un dispositif magnétique selon la revendication 8, **caractérisé en ce que** le composant tubulaire coaxial (18, 31) se projette selon un axe sur ladite surface du moyen de support (17, 38) afin de fournir un emplacement latéral à la matrice (S) qui est soutenue contre la face plate (11).

10. Un dispositif magnétique selon la revendication 8 ou la revendication 9, **caractérisé en ce que** les aimants (24, 24a) sont fixés dans leur empreinte respective (20, 20a) dans l'élément annulaire (17, 38) à l'aide d'un adhésif prenant à chaud.
